# EUROPÄISCHE PATENTSCHRIFT

(11) **EP 0 389 750 B1**
(45) Veröffentlichungstag und Bekanntmachung des Hinweises auf die Patenterteilung: **03.11.1993**
(21) Anmeldenummer: 90101644.4
(22) Anmeldetag: 27.01.1990
(51) Int. Cl.: F01N 3/28, B01J 35/04

(54) **Trägerkörper für einen katalytischen Reaktor zur Abgasreinigung**
Carrier for a catalytic reactor for the purification of exhaust gases
Support pour un réacteur catalytique de purification des gaz d'échappement

(30) Priorität: 31.03.1989 DE 3910359
(43) Veröffentlichungstag der Anmeldung: 03.10.1990
(73) Patentinhaber: Emitec Gesellschaft für Emissionstechnologie mbH, 53797 Lohmar (DE)
(72) Erfinder: Kuchelmeister, Reinhold, Dipl.-Ing. (FH), D-7035 Waldenbuch (DE); Grüner, Andreas, Dipl.-Ing. (FH), D-7320 Göppingen (DE)
(74) Vertreter: Kahlhöfer, Hermann, Dipl.-Phys.

(56) Entgegenhaltungen:
- EP-A- 0 279 159
- DE-A- 3 312 944
- DE-U- 8 527 885
- FR-A- 2 321 346

## Beschreibung

Die Erfindung betrifft einen Trägerkörper für einen katalytischen Reaktor zur Abgasreinigung, insbesondere für Kraftfahrzeugmotoren, bei dem die vom Abgas durchströmten Kanäle von tunnelförmigen Wellungen eines oder mehrerer in benachbarten Lagen angeordneter metallischer und quer zu ihrer Längsrichtung elastisch ausgebildeter Wellbänder gebildet sind.

Ein solcher in sich elastischer Trägerkörper ist aus dem DE-GM 85 27 885 bekannt. Bei dieser bekannten Bauart wird der Trägerkörper aus zwei abwechselnden Blechlagen unterschiedlicher Struktur gewickelt oder geschichtet. Eine der Blechlagen besitzt dabei eine Wellenstruktur aus mindestens zwei überlagerten oder abwechselnden Wellen unterschiedlicher Wellenlänge und/oder Amplitude oder es sind in beiden Blechlagen solche Wellenstrukturen vorgesehen. Bei diesen Bauarten verringert sich daher gegenüber anderen metallischen Trägerkörpern (DE-OS 33 41 868) die Anzahl der Berührungsstellen zwischen den beiden Blechlagen, so daß dadurch die Elastizität der entstehenden Struktur erhöht ist. Trägerkörper dieser Art eignen sich daher besser, durch hohe Temperaturunterschiede bedingte Wärmeausdehnungen aufzunehmen, ohne an Lebensdauer und Qualität einzubüßen. Allerdings ist ein weiträumiges elastisches Nachgeben der gewellten Bleche nicht möglich, da dann zusätzliche Kontaktstellen zwischen den Blechlagen entstehen.

Der Erfindung liegt die Aufgabe zugrunde, einen Trägerkörper der eingangs genannten Art so auszugestalten, daß er in Strömungsrichtung stabil ist, dennoch aber eine hohe radiale Elastizität aufweist, so daß große Verformungen möglich sind.

Zur Lösung dieser Aufgabe dient ein Trägerkörper der eingangs genannten Art, bei dem die vom Abgas durchströmten Kanäle von tunnelförmigen Wellungen eines oder mehrerer in benachbarten Lagen angeordneter metallischer und quer zur ihrer Längsrichtung nachgiebiger Wellbänder gebildet sind, und wobei die Seitenwände der tunnelförmigen Wellungen ein nachgiebiges Zwischenstück aufweisen, das bei einer Krafteinwirkung auf die Außenstege der Wellungen elastisch verformbar ist, wobei erfindungsgemäß das nachgiebige Zwischenstück in einem Zustand ohne Krafteinwirkung unter einem Winkel zur Längsrichtung des Wellbandes verläuft, der kleiner als der Winkel angrenzender Seitenwandteile zur Längsrichtung ist, aber gleiches Vorzeichen hat.

Besonders einfach und wirtschaftlich läßt sich ein solches Zwischenstück nach den Merkmalen des Anspruchs 2 mit einem vom Kurvenverlauf der Seitenwände abweichenden Absatz bilden, wobei bei einem Wellband mit trapezförmigem Wellprofil dieser Absatz ein über 2 Biegekanten quer zum Verlauf eines oberen und unteren Seitenwandteiles herausgebogener Teil der Seitenwand sein kann. Bei dieser Ausgestaltung wirkt der zwischen den Biegekanten liegende Seitenwandteil wie ein Scharnier, das sich jedoch elastisch zurückstellt. Solche Wellbänder haben daher trotz einer Anzahl von Befestigungsstellen zwischen benachbarten Lagen, die jenen der vorher erwähnten gekannten Trägerkörper (DE-OS 33 41 868) entspricht, eine hohe Elastizität in Richtung quer zu ihrer Längsrichtung. Die daraus gebildeten Trägerkörper sind daher in der gewünschten radialen Richtung nachgiebig, ansonsten aber in sich stabil. Weitere vorteilhafte Ausgestaltungen sind in den übrigen abhängigen Ansprüchen angegeben. So bieten die Merkmale der Ansprüche 4 und 5 den Vorteil, daß sich ein Wellband dieser

Art in sehr einfacher Weise durch einen Walzvorgang herstellen läßt. Dies gilt auch für die Merkmale der Ansprüche 6 und 7. Die Merkmale des Anspruches 8 schließlich bringen den Vorteil mit sich, daß auch von der in der Regel an das Wellband angrenzenden Glattbandlage, die nun ebenfalls wellenförmig ist, keine nachteiligen Beeinflussungen auf die Elastizität des Wellbandes ausgeübt werden.

Die Erfindung ist in der Zeichnung anhand von mehreren Ausführungsbeispielen dargestellt und wird im folgenden beschrieben.

Es zeigen:
- Fig. 1: die schematische Darstellung eines Längsschnittes durch ein metallisches Wellband, das zur Herstellung eines Trägerkörpers gemäß der Erfindung verwendet werden kann,
- Fig. 2: ein Wellband ähnlich jenes der Fig. 1, jedoch in einer etwas abgewandelten Ausführungsform,
- Fig. 3: die schematische Schnittdarstellung durch ein Wellband gemäß der Erfindung in einer weiteren Ausführungsform und
- Fig. 4: die schematische Darstellung des Wellbandes der Fig. 3, jedoch in der elastisch zusammengedrückten Lage, in der diese Lage die geringste Höhe einnimmt.

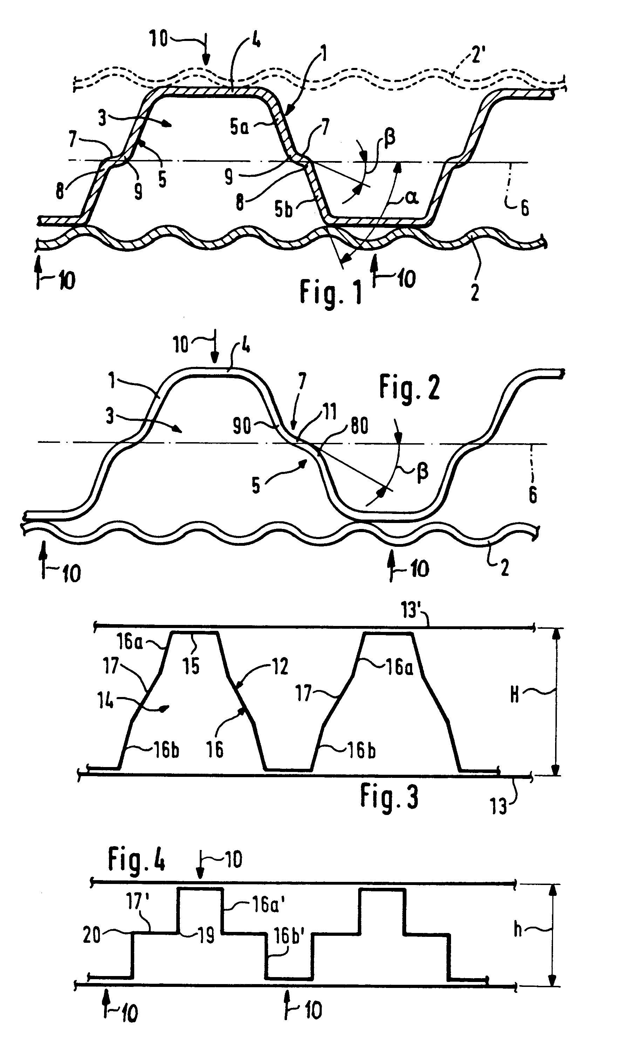

In der Fig. 1 ist ein erstes metallisches Wellband (1) in einem Teilausschnitt eines Längsschnittes gezeigt, das zur Herstellung eines Trägerkörpers in bekannter Weise zusammen mit einem zweiten, mit einer Art Mikrowellung versehenen Wellband (2) spiralförmig aufgewickelt werden kann. Möglich ist es auch, die Wellbänder (1) und (2), von denen nur eine der tunnelförmigen Wellungen (3) dargestellt ist, aufeinander zu schichten oder im Zick-Zack zu falten, wobei dann aber wegen der Richtungsumkehr beim Falten jedes Wellband (1) von zwei Wellbändern gemäß dem Wellband (2) eingehüllt sein müßte. Beim Wickeln dagegen stößt in bekannter Weise das Wellband (2) der einen Lage an die jeweils in der angrenzenden Wickellage vorgesehenen Außenstege (4), wie das gestrichelt mit dem Wellband (2′) angedeutet ist, das zu der benachbarten Lage gehört.

Die tunnelförmige Wellung (3), welche in dem fertigen Trägerkörper einen der vom Abgas durchströmten Kanäle bildet, wird beim gezeigten Ausführungsbeispiel von dem Außensteg (4) des Wellbandes (1) und von den beiden an diesen Außensteg seitlich anschließenden Seitenwänden (5) gebildet, die, da die Gesamtprofilierung der Wellung (3) etwa trapezförmig ist, unter einem bestimmten Winkel zur strichpunktiert angedeuteten Längsrichtung des Wellbandes (1) verlaufen. Die Seitenwände (5) werden dabei durch zwei, unter der gleichen Neigung zur Längsrichtung (6) verlaufende Seitenwandteile (5a) und (5b) gebildet, zwischen denen ein Zwischenstück in der Form eines Absatzes (7) liegt, der zwar ebenfalls Bestandteil der Seitenwand (5) ist, eine zur Längsrichtung (6) aber abweichende Neigung aufweist. Die Neigung des Absatzes (7) ist im Vergleich zu jener der Seitenwandteile (5a) und (5b) dabei so gewählt, daß der Winkel (β) zwischen der Längsrichtung (6) und dem Verlauf des Absatzes (7) kleiner ist als der Winkel (α) zwischen jedem der Seitenwandteile (5a) und (5b) und der Längsrichtung (6). Der Winkel (β) beträgt dabei beim gezeigten Ausführungsbeispiel ca. 20° während der Winkel (α) etwa dreimal so groß ist, also etwa 60° beträgt.

Durch diese Ausgestaltung bildet der Absatz (7) mit seinen beiden Biegekanten (8) und (9), mit denen er in die Seitenwandteile (5a) und (5) übergeht, eine Art elastisches Scharnier in der Seitenwand (5), welches dafür sorgen kann, daß bei einer quer zur Längsrichtung (6) erfolgenden, etwa im Sinn der Pfeile (10) ausgeübten Krafteinwirkung das Wellband (1) elastisch in sich nachfedern kann, indem nämlich im Bereich des Absatzes (7) eine elastische Deformation durch Änderung des Winkels (β) eintritt. Die in Fig. 1 gezeigte Lage des Wellbandes (1) mit dem Wellband (2), das auch ein Glattband ohne Wellungen sein kann, ist daher elastisch nachgiebig. Werden die Wellbänder (1) und (2) daher in bekannter Weise spiralig zu einem Trägerkörper aufgewickelt, so ist auch dieser Trägerkörper in radialer Richtung nachgiebig. Er kann durch Temperaturdifferenzen bedingte Längenänderungen des Materiales in sich aufnehmen. Lötstellen zwischen benachbarten Lagen und auch im Bereich des üblicherweise einen solchen gewickelten Trägerkörper außen umgebenden Rohrmantels werden daher nicht aufgrund solcher Wärmedehnungen durch Kräfte beeinflußt, die u. U. zum Bruch und zur Beschädigung des Trägerkörpers führen können. In Richtung der Durchströmung, die durch die tunnelförmigen Wellungen (3) hindurch erfolgt, ist der Trägerkörper jedoch stabil.

Die Fig. 2 zeigt ein Wellband, das in seiner Funktion und im Aufbau im wesentlichen mit jenem der Fig. 1 übereinstimmt. Geändert sind hier nur die Übergänge zwischen dem Absatz (7) und den Seitenwandteilen, und es ist eine etwas abgerundete und durch Radien gekennzeichnete Kurvenstruktur für den Außensteg (4) und für die Seitenwände (5) vorgesehen. Hier ist die Mitte des Absatzes (7) durch einen Krümmungswendepunkt (11) im Verlauf der Kurvenform der Seitenwand (5) gekennzeichnet. In diesem Fall sind die bei der Ausführungsform der Fig. 1 noch deutlich zu lokalisierenden Biegekanten (8) und (9) durch Biegebereiche (80) und (90) gekennzeichnet, die bei einer Krafteinwirkung im Sinn der Pfeile (10), aber ebenfalls in der einen oder anderen Richtung, elastisch deformiert werden, so daß der im Bereich des Krümmungswendepunktes (11) liegende Abschnitt (7) im Krümmungswendepunkt (11) auch eine Tangente aufweisen kann, deren Winkel (β) mit der Längsrichtung (6) Null oder sogar kleiner als Null wird, d.h. sich von der Längsrichtung (6) aus nach oben erstrecken kann. Wie weit dabei diese elastische Verformung möglich ist, hängt von der Elastizität des zur Herstellung des Wellbandes (1) benutzten Materiales und auch von der Stärke des Bleches ab. Wie den Fig. 1 und 2 aber ohne weiteres entnehmbar ist, lassen sich die Wellbänder (1) in sehr einfacher und bekannter Weise durch Walzen eines ursprünglich glatten Metallbandes herstellen. Die Formgebung der Wellungen (3) erlaubt die Herstellung in der bisher bekannten Weise. Aufwendige zusätzliche Maßnahmen sind nicht notwendig.

Die Fig. 3 zeigt sehr schematisch noch eine weitere Möglichkeit der Ausgestaltung eines quer zu seiner Längsrichtung nachgiebigen Wellbandes. Hier ist ein Wellband (12) vorgesehen, das mit einem Glattband (13) zusammengewickelt oder gefaltet werden kann, um einen Trägerkörper zu bilden. Dieses Wellband (12) weist ebenfalls tunnelartige Wellungen (14) auf, die mit Außenstegen (15) jeweils an den Glattbändern (13) bzw. (13′) (der benachbarten Lage) anliegen und aus diesen Außenstegen (15) und Seitenwänden (16) bestehen. Die Seitenwände (16) sind jeweils aus Seitenwandteilen (16a, 16b) und aus einem dazwischenliegenden Abschnitt (17) aufgebaut, der zu der mit der Längsrichtung zusammenfallenden Richtung des Verlaufes der Glattbänder (13) eine geringere Neigung hat als die Seitenwandteile (16b). Wird das Wellband (12) der Fig. 3 durch eine Krafteinwirkung im Sinn der Pfeile (10) (s. Fig. 4) quer zu seiner Längsrichtung verformt, dann knickt der Abschnitt (17) um die Biegekanten (19) bzw. (20) bis in eine etwa parallel zur Längsrichtung verlaufende Lage um und die Seitenwandteile (16a) und (16b) kommen in die etwa senkrecht dazu verlaufende Lage (16a′) und (16b′). Durch dieses elastische Ausweichen der Seitenwände (16) erhält eine aus dem Wellband (12) und dem Glattband (13) gebildete Lage die Höhe (h), die gegenüber der Höhe (H) des Bandes in seiner spannungsfreien Ausgangslage etwa um ein Drittel kleiner ist. Ermöglicht wird diese Nachgiebigkeit bei diesem Ausführungsbeispiel durch die gleichgroße Ausbildung der Seitenwandteile (16a, 16b) und des Abschnittes (17), von denen jeder etwa ein Drittel der Gesamtlänge jeder Seitenwand (16) ausmacht. Auch eine solche Ausführungsform ermöglicht daher eine radiale Nachgiebigkeit bei einem aus solchen Bändern gewickelten Trägerkörper. Auch das Wellband (12) läßt sich in einfacher Weise durch einen Walzvorgang herstellen.

Selbstverständlich ist die Erfindung nicht auf die Ausführungsbeispiele beschrünkt Wichtig ist, daß das anhand der Fig. erläuterte elastische Nachgeben im Bereich der Seitenwände des Wellbandes ermöglicht wird, so daß dadurch auch die gewünschte elastische Höhenänderung beim Auftreten von Kräften möglich wird. Das kann nicht nur im Betrieb des fertigen Katalysators durch Temperaturunterschiede der Fall sein, sondern auch dann, wenn der Trägerkörper nach der Erfindung vor dem Einsetzen in einen Gehäusemantel an dessen Kontur durch Verformen angepaßt wird.

## Patentansprüche

1. Trägerkörper für einen katalytischen Reaktor zur Abgasreinigung, insbesondere für Kraftfahrzeugmotoren, bei dem die vom Abgas durchströmten Kanäle von tunnelförmigen Wellungen eines oder mehrerer in benachbarten Lagen angeordneter metallischer und quer zu ihrer Längsrichtung nachgiebiger Wellbänder gebildet sind, und wobei die Seitenwände (5; 16) der tunnelförmigen Wellungen (3; 14) ein nachgiebiges Zwischenstück (7; 17) aufweisen, das bei einer Krafteinwirkung auf die Außenstege (4; 15) der Wellungen elastisch verformbar ist, dadurch gekennzeichnet, daß das nachgiebige Zwischenstück (7, 17) in einem Zustand ohne Krafteinwirkung unter einem Winkel (β) zur Längsrichtung (6) des Wellbandes (1) verläuft, der kleiner als der Winkel (α) angrenzender Seitenwandteile (5a, 5b; 16a, 16b) zur Längsrichtung (6) ist, aber gleiches Vorzeichen hat.

2. Trägerkörper nach Anspruch 1, dadurch gekennzeichnet, daß das Zwischenstück von einem vom Kurvenverlauf der Seitenwände (5, 16) abweichenden Absatz (7, 17) gebildet ist.

3. Trägerkörper nach den Ansprüchen 1 und 2 mit einem trapezförmigen Wellprofil, dadurch gekennzeichnet, daß der Absatz (7, 17) ein über zwei Biegekanten (8, 9 bzw. 19, 20) quer zum Verlauf eines oberen und unteren Seitenwandteiles (5a, 5b, 16a, 16b) herausgebogener Teil der Seitenwand ist.

4. Trägerkörper nach Anspruch 3, dadurch gekennzeichnet, daß der herausgebogene Teil (7, 17) etwa in der Mitte der Seitenwand (5, 16) liegt.

5. Trägerkörper nach den Ansprüchen 1 bis 3, dadurch gekennzeichnet, daß die Biegekanten die Form von gekrümmten Bereichen (80, 90) aufweisen, deren Radien nach verschiedener Richtung weisen, so daß im Bereich der Mitte des Absatzes (7) ein Krümmungswendepunkt (11) liegt.

6. Trägerkörper nach Anspruch 3, dadurch gekennzeichnet, daß die Biegekanten (19, 20) des Absatzes (17) Knickkanten sind, die jeweils etwa bei einem Drittel der Gesamtlänge der Seitenwand (6) liegen und daß die Neigung des Absatzes (17) im spannungslosen Zustand nur geringfügig von derjenigen der übrigen Seitenwandteile (16a, 16b) abweicht.

7. Trägerkörper nach Anspruch 6, dadurch gekennzeichnet, daß das Material für das Wellband (12) so ausgelegt ist, daß eine Verformung der Wellungen (14) auf etwa zwei Drittel der im spannungslosen Zustand vorliegenden Höhe (H) möglich ist.

8. Trägerkörper nach einem der Ansprüche 1 bis 7, dadurch gekennzeichnet, daß zwischen benachbarten Lagen der ersten Wellbänder (1) jeweils Wellbänder (2) mit einer Mikrowellung vorgesehen sind.

## Claims

1. A carrier body for a catalytic reactor for exhaust gas cleaning, in particular for internal combustion engines, in which the passages through which the exhaust gas flows are formed by tunnel-shaped corrugations of one or more metallic corrugated strips which are arranged in adjacent layers and which are flexible transversely to their longitudinal direction, and wherein the side walls (5; 16) of the tunnel-shaped corrugations (3; 14) have a flexible intermediate portion (7; 17) which is elastically deformable when a force acts on the outside web portions (4; 15) of the corrugations, characterised in that, in a condition without a force acting, the flexible intermediate portion (7, 17) extends at an angle (β) relative to the longitudinal direction (6) of the corrugated strip (1), which is smaller than the angle (α) of adjoining side wall portions (5a, 5b; 16a, 16b) relative to the longitudinal direction (6), but has the same sign.

2. A carrier body according to claim 1 characterised in that the intermediate portion is formed by a step (7, 17) which departs from the curved configuration of the side walls (5, 16).

3. A carrier body according to claims 1 and 2 with a trapezoidal corrugation profile characterised in that the step (7, 17) is a part of the side wall which is bent out by way of two bending edges (8, 9 and 19, 20 respectively) transversely relative to the configuration of an upper and a lower side wall portion (5a, 5b, 16a, 16b).

4. A carrier body according to claim 3 characterised in that the outwardly bent part (7, 17) is disposed approximately in the middle of the side wail (5, 16).

5. A carrier body according to claims 1 to 3 characterised in that the bending edges are in the shape of curved regions (80, 90) whose radii face in different directions so that a curvature reversal point (11) is disposed in the region of the middle of the step (7).

6. A carrier body according to claim 3 characterised in that the bending edges (19, 20) of the step (17) are kink edges which are each disposed approximately at a third of the total length of the side wall (6) and that the inclination of the step (17) in the stress-free condition differs only slightly from that of the other side wall portions (16a, 16b).

7. A carrier body according to claim 6 characterised in that the material for the corrugated strip (12) is such that deformation of the corrugations (14) is possible to about two thirds of the height (H) which prevails in the stress-free condition.

8. A carrier body according to one of claims 1 to 7 characterised in that respective corrugated strips (2) with a micro-corrugation configuration are provided between adjacent layers of the first corrugated strips (1).

## Revendications

1. Corps support pour un réacteur catalytique d'épuration de gaz d'échappement, notamment pour des moteurs de véhicules automobiles, dans lequel les canaux traversés par les gaz d'échappement sont formés par des ondulations en forme de tunnel de bandes métalliques ondulées disposées en couches voisines et flexibles transversalement à leur direction longitudinale, les branches latérales (5 ; 16) des ondulations en forme de tunnel (3 ; 14) présentant une partie intermédiaire flexible (7 ; 17), qui est élastiquement déformable lors de l'action de forces sur les parties médianes extérieures (4 ; 15) des ondulations en forme de tunnel (3 ; 14), **caractérisé** en ce qu'en l'absence d'action de forces, la partie intermédiaire flexible (7, 17) s'étend, par rapport à la direction longitudinale (6) de la bande ondulée (1), sous un angle (β) qui est inférieur à l'angle (α) des parties limitrophes (5a, 5b ; 16a, 16b) des branches latérales par rapport à la direction longitudinale (6), mais est du même signe que ce dernier.

2. Corps support selon la revendication 1, **caractérisé** en ce que la partie intermédiaire est formée par un décrochement (7, 17) s'écartant de l'allure courbe des branches latérales (5, 16).

3. Corps support selon la revendication 1 ou 2, avec un profil d'ondulation de forme trapézoïdale, **caractérisé** en ce que le décrochement (7, 17) est une partie de la branche latérale qui, par l'intermédiaire de deux arêtes de pliage (8, 9 ou 19, 20), est repliée vers l'extérieur transversalement à l'allure d'une partie supérieure et d'une partie inférieure (5a, 5b, 16a, 16b) de la branche latérale.

4. Corps support selon la revendication 3, **caractérisé** en ce que la partie repliée vers l'extérieur (7, 17) se trouve approximativement au milieu de la branche latérale (5, 16).

5. Corps support selon l'une quelconque des revendications 1 à 3, **caractérisé** en ce que les arêtes de pliage ont la forme de régions coudées (80, 90) dont les rayons sont dirigés dans des directions différentes, de sorte qu'un point d'inflexion de courbure (11) se trouve dans la région du milieu du décrochement (7).

6. Corps support selon la revendication 3, **caractérisé** en ce que les arêtes de pliage (19, 20) du décrochement (17) sont des arêtes d'inflexion qui se trouvent à environ un tiers de la longueur totale de la branche latérale (16), et en ce que l'inclinaison du décrochement (17), à l'état exempt de contrainte, ne s'écarte que légèrement de celle des autres parties (16a, 16b) de la branche latérale.

7. Corps support selon la revendication 6, **caractérisé** en ce que le matériau pour la bande ondulée (12) est conçu de telle sorte qu'on peut obtenir une déformation des ondulations (14) à environ deux-tiers de la hauteur (H) présente à l'état exempt de contrainte.

8. Corps support selon l'une quelconque des revendications 1 à 7, **caractérisé** en ce que des bandes ondulées respectives (2) à micro-ondulation sont prévues entre des couches voisines des premières bandes ondulées (1).
